Europäisches Patentamt

European Patent Office

Office européen des brevets

(19)

(11) Veröffentlichungsnummer: **0 499 935 A1**

# (12) EUROPÄISCHE PATENTANMELDUNG

(21) Anmeldenummer: **92102189.5**

(22) Anmeldetag: **10.02.92**

(51) Int. Cl.5: **H01M 8/24**, H01M 8/12

(30) Priorität: **16.02.91 DE 4104841**

(43) Veröffentlichungstag der Anmeldung:
**26.08.92 Patentblatt 92/35**

(84) Benannte Vertragsstaaten:
**CH DE FR GB LI SE**

(71) Anmelder: **ABB PATENT GmbH**
**Kallstadter Strasse 1**
**W-6800 Mannheim 31(DE)**

(72) Erfinder: **Stadelmann, Heinz, Dr.**
**Im Schilling 16**
**W-6906 Leimen(DE)**

(74) Vertreter: **Rupprecht, Klaus, Dipl.-Ing. et al**
**c/o ABB Patent GmbH, Postfach 10 03 51**
**W-6800 Mannheim 1(DE)**

(54) **Festelektrolyt-Brennstoffzellenanordnung.**

(57) Die Erfindung bezieht sich auf eine Brennstoff-zellenanordnung, bei der auf einem keramischen Träger mehrere Brennstoffzellen mit Festelektrolyten angeordnet sind. Zur Verbesserung der Festigkeit (2) und zur Verringerung von Abdichtungsproblemen wird vorgeschlagen, den Träger (2) an sich gasdicht auszuführen und in Wandbereichen (12), die mit Brennstoffzellen (4) bedeckt sind, Kanäle (11) vorzu-sehen, die eine Zufuhr von Luft zu Kathoden (6) der Brennstoffzellen (4) ermöglichen. Die Brennstoffzel-lenanordnung kann in Hochtemperaturbrennstoffzellen-Batterien angewen-det werden.

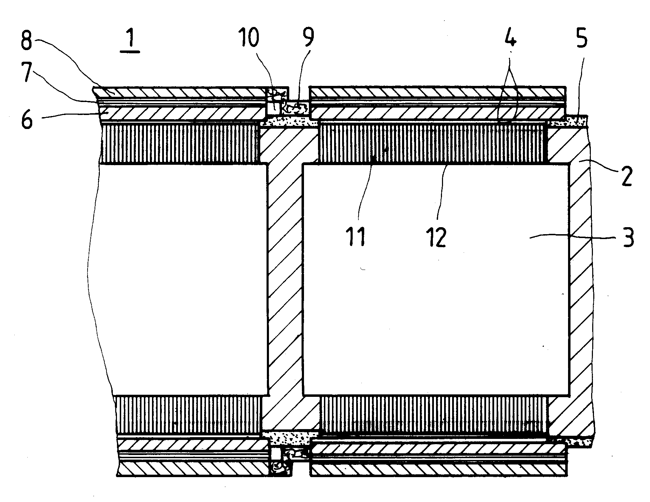

Signifikant ist die einzige Figur der Zeichnung.

Die Erfindung bezieht sich auf eine Brennstoffzellenanordnung mit einem plattenförmigen keramischen Träger, der Hohlräume aufweist, denen ein Gas, vorzugsweise Luft, zuführbar ist, und mehreren auf dem Träger angeordneten plattenförmigen Brennstoffzellen, die jeweils eine Anode, eine Kathode und einen ionenleitenden Festelektrolyten aufweisen. Außerdem bezieht sich die Erfindung auf ein bevorzugtes Verfahren zur Herstellung des Trägers der Brennstoffzellenanordnung.

Eine solche Brennstoffzellenanordnung ist aus der DE-OS 39 07 485 bekannt. Dieser Druckschrift sind Einzelheiten zum Aufbau und zur Arbeitsweise einer Brennstoffzellen-Batterie zu entnehmen, die Brennstoffzellenanordnungen mit Gruppen von in Serie oder parallel geschalteten Brennstoffzellen enthält. In einer solchen Brennstoffzellen-Batterie wird den Kathoden der Brennstoffzellen ein sauerstoffhaltiges Gas, z.B. Luft, zugeleitet und an den Außenflächen der Anoden der Brennstoffzellen wird ein gasförmiger oder vergaster Brennstoff vorbeigeleitet. Der zum Aufbau der Brennstoffzellenanordnung benutzte Träger ist eine Grundplatte, auf der Brennstoffzellen nebeneinander angeordnet und elektrisch miteinander verbunden sind. Der Träger muß aber auch den Zugang der Luft zur Kathode der Brennstoffzelle ermöglichen. In der DE-OS 39 07 485 sind zu diesem Zweck plattenförmige keramische Träger vorgesehen, die im Inneren Hohlräume zur Luftführung aufweisen. Der Zutritt von Luft vom Luftkanal durch die Wand des Trägers zu den Kathoden der Brennstoffzellen ist dadurch ermöglicht, daß der Träger aus porösem Material hergestellt und somit gasdurchlässig ausgeführt ist. Andererseits muß die aus Träger und Brennstoffzelle bestehende Brennstoffzellenanordnung einen direkten Kontakt der Luft mit dem Brennstoff unterbinden, also an mehreren Stellen mit geeigneten Schichten abgedichtet werden.

Der gasdurchlässige keramische Träger der bekannten Brennstoffzellenanordnung wird vorzugsweise durch Extrusion hergestellt, wobei der Extrusionsmasse nicht handelsübliche Porenbildner zugesetzt werden, um die erforderliche Gasdurchlässigkeit zu erreichen. Allerdings beeinträchtigt dieser Zusatz die Extrusion und außerdem ist die mechanische Festigkeit sowohl des Grünkörpers als auch des gesinterten Trägers relativ gering. Nicht von Brennstoffzellen bedeckte Flächen des Trägers, wie z.B. Stirnseiten des Trägers, müssen abgedichtet werden, wobei sich das Abdichten poröser Strukturen als schwierig erwiesen hat. Außerdem erfordert die bekannte Anordnung, daß die in der genannten Druckschrift mit Bezugszeichen 14 versehenen elektrisch leitenden Schichten zur elektrischen Verbindung von Brennstoffzellen aus gasdichtem Material hergestellt werden.

Davon ausgehend liegt der Erfindung die Aufgabe zugrunde, eine Brennstoffzellenanordnung anzugeben, die einfacher und mit hoher Qualität herzustellen ist. Außerdem soll ein Verfahren zur Herstellung angegeben werden.

Diese Aufgabe wird gelöst durch eine Brennstoffzellenanordnung mit

a) einem plattenförmigen keramischen Träger, der Hohlräume aufweist, denen ein Gas, vorzugsweise Luft, zuführbar ist, und

b) mehreren auf dem Träger angeordneten plattenförmigen Brennstoffzellen, die jeweils eine Anode, eine Kathode und einen ionenleitenden Festelektrolyten aufweisen,

wobei

c) der keramische Träger aus einem nach Fertigstellung des Trägers gasdichten Material hergestellt ist und wobei

d) Wandbereiche des Trägers, die von Brennstoffzellen bedeckt sind, mit einer Vielzahl von Kanälen zur Gasführung von den Hohlräumen zu den Brennstoffzellen versehen sind.

Die erfindungsgemäße Brennstoffzellenanordnung enthält in vorteilhafter Weise einen an sich gasdichten Träger, der lediglich an den erwünschten Stellen gasdurchlässig gestaltet ist. Ein solcher Träger kann mit handelsüblichen keramischen Pulvern und Extrusionszusätzen hergestellt und gasdicht gesintert werden. Der gasdichte Träger weist gegenüber einem porösen Träger sowohl als Grünkörper wie auch als gesinterter Körper eine erhöhte Festigkeit auf und erleichtert ganz wesentlich die Abdichtung. Außerdem zeigt der gasdichte Träger ein verbessertes Klebeverhalten, da eine zum Kleben der Brennstoffzellen aufgebrachte Klebersuspension nicht in Poren des Trägers abfließen kann.

Die Brennstoffzellenanordnung kann hergestellt werden, indem zunächst ein keramischer Träger als Grünkörper hergestellt, mit Luftkanälen versehen und gesintert wird und anschließend die Brennstoffzellen sowie die erforderlichen Isolierund Verbindungsschichten aufgebracht werden. Gemäß einem bevorzugten Verfahren zur Herstellung des gasdichten keramischen Trägers werden in den Grünkörper die Luftkanäle durch Stanzen mittels eines Nadelkamms hergestellt.

Eine genauere Beschreibung der erfindungsgemäßen Anordnung erfolgt nachstehend anhand der Zeichnung.

Die Zeichnung zeigt in schematischer Darstellung einen Ausschnitt aus einem Querschnitt durch eine Brennstoffzellenanordnung 1. Es ist ein Träger 2 mit Hohlräumen 3 zur Luftführung gezeigt. Auf der Außenseite des Trägers 2 sind Brennstoffzellen 4 mit einem Kleber 5 befestigt. Die Brennstoffzellen 4 haben einen dreischichtigen Aufbau mit jeweils einer dem Träger 2 zugewandten Kathode 6, einem Festelektrolyten 7 und einer Anode 8. Zur Herstellung einer Serienschaltung zwischen Brennstoffzellen 4 ist jeweils die Anode einer ersten Brennstoffzelle mit der Kathode einer zweiten Brennstoffzelle mit Hilfe einer elektrisch leitenden Verbindungsschicht 9 verbunden. Nicht mit der leitenden Verbindungsschicht 9 kontaktierte Kanten der Kathoden 6 sind mit Isoliermaterial 10 abgedeckt.

Beim Betrieb der Brennstoffzellenanordnung 1 befindet sich in den Hohlräumen 3 Luft und außerhalb der Anordnung 1 Brenngas. Um zu verhindern, daß die beiden Gase direkt in Kontakt kommen können, sind der Träger 2, der Kleber 5 und das Isoliermaterial 10 gasdicht ausgeführt. Die elektrisch leitende Verbindungsschicht 9 braucht dagegen nicht gasdicht zu sein. Da die elektrisch leitende Verbindungsschicht 9 einer Reihe von Anforderungen genügen muß, stellt der Wegfall der Forderung nach Gasdichtigkeit einen erheblichen Vorteil dar. Für eine Luftzufuhr durch den an sich gasdichten Träger 2 zu den Kathoden 6 der Brennstoffzellen 4 ist durch Anordnung einer Vielzahl von kleinen Kanälen 11 in der Wand des Trägers 2 gesorgt. Die Kanäle 11 sind in Wandbereichen 12 des Trägers 2 angeordnet, die von den Kathoden 6 der Brennstoffzellen 4 bedeckt sind.

Die Kanäle 11 können auf unterschiedliche Weise hergestellt werden. Nachstehend ist ein bevorzugtes Verfahren zur Herstellung des Trägers 2 mit Hohlräumen 3 und Kanälen 11 beschrieben, wobei das aus der Mikroelektronik bekannte Via-Punching-Verfahren zur Anwendung kommt.

Der Träger 2 aus keramischem Material mit Hohlräumen 3 wird in einem ersten Schritt durch Extrudieren als Grünkörper hergestellt. In einem zweiten Schritt werden in den Grünkörper in Wandbereichen 12, die später mit Brennstoffzellen 4 bedeckt werden, Kanäle 11 durch Via-Punching hergestellt. Dabei werden z.B. je Quadratmillimeter Wandfläche zwei durch die Wand gehende Kanäle 11 mit je 150 $\mu$m Durchmesser durch Stanzen mittels Nadeln hergestellt. In einem dritten Herstellungsschritt wird der Träger 2 zu einem gasdichten Körper gesintert. Danach wird der Träger 2 im vierten Schritt in eine als Kleber 5 wirkende Keramiksuspension getaucht und anschließend getrocknet.

Auf den so vorbereiteten Träger 2 werden in weiteren Schritten das Isoliermaterial 10 im benötigten Muster und die elektrisch leitende Verbindungsschicht 9, z.B. durch Siebdruck, aufgebracht und schließlich die Aktiv-Komponenten, also die Brennstoffzellen 4, z.B. als vorgefertigte Komponenten aufgebracht und durch Sintern mit dem Träger 2 verbunden. Einzelheiten zu geeigneten Werkstoffen, Prozeßtemperaturen und Dimensionierungen können der DE-OS 39 07 485 entnommen werden, da die dortigen Ausführungen mit Ausnahme der Beschreibung des dort porösen Trägers und den dadurch bedingten Maßnahmen auch auf die hier beschriebene Brennstoffzellenanordnung zutreffen.

## Patentansprüche

1. Brennstoffzellenanordnung mit
   a) einem plattenförmigen keramischen Träger, der Hohlräume aufweist, denen ein Gas, vorzugsweise Luft, zuführbar ist, und
   b) mehreren auf dem Träger angeordneten plattenförmigen Brennstoffzellen, die jeweils eine Anode, eine Kathode und einen ionenleitenden Festelektrolyten aufweisen,
   dadurch gekennzeichnet, daß
   c) der keramische Träger (2) aus einem nach Fertigstellung des Trägers gasdichten Material hergestellt ist und daß
   d) Wandbereiche (12) des Trägers (2), die von Brennstoffzellen (4) bedeckt sind, mit einer Vielzahl von Kanälen (11) zur Gasführung von den Hohlräumen (3) zu den Brennstoffzellen (4) versehen sind.

2. Verfahren zur Herstellung eines keramischen Trägers zur Verwendung in einer Brennstoffzellenanordnung nach Anspruch 1, dadurch gekennzeichnet, daß
   a) in einem ersten Schritt ein mit Hohlräumen (3) versehener plattenförmiger Träger (2) vorzugsweise durch extrudieren als Grünkörper hergestellt wird,
   b) in einem zweiten Schritt in ausgewählten Wandbereichen (12) des Trägers (2) durch die Wand des Trägers (2) führende Kanäle (11) durch Stanzen mittels eines Nadelkamms (Via-Punching) hergestellt werden und
   c) in einem dritten Schritt der Träger (2) - abgesehen von Zugängen zu den Hohlräumen (3) und von den Kanälen (11) - gasdicht gesintert wird.

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| A | DE-A-4 033 284 (ASEA BROWN BOVERI AG)<br>* Seite 3, Zeile 50 - Zeile 56 *<br>* Seite 3, Zeile 62 - Zeile 66; Abbildung 8 *<br>--- | | H01M8/24<br>H01M8/12 |
| A | US-A-3 525 646 (H. TANNENBERGER ET ALL)<br>* Spalte 3, Zeile 10 - Zeile 48; Abbildung 1 *<br>* Ansprüche 5,6 *<br>--- | | |
| A | DE-A-1 935 973 (COMPANIE FRANCAISE DE RAFFINAGE)<br>* Seite 5, letzter Absatz; Abbildung 1 *<br>--- | | |
| P,A | EP-A-0 454 095 (YOSHIDA KOGYO K.K.)<br>* Spalte 5, Zeile 37 - Spalte 6, Zeile 28;<br>Abbildungen 6-10 *<br>--- | 1 | |
| D,A | EP-A-0 387 643 (ASEA BROWN BOVERI)<br><br>----- | | |

| | RECHERCHIERTE SACHGEBIETE (Int. Cl.5) |
|---|---|
| | H01M<br>G01N |

Der vorliegende Recherchenbericht wurde für alle Patentansprüche erstellt

| Recherchenort | Abschlußdatum der Recherche | Prüfer |
|---|---|---|
| DEN HAAG | 27 MAI 1992 | D'HONDT J.W. |